# EUROPÄISCHE PATENTSCHRIFT

(11) **EP 2 435 698 B1**
(45) Veröffentlichungstag und Bekanntmachung des Hinweises auf die Patenterteilung: **03.04.2013**
(21) Anmeldenummer: 10718427.7
(22) Anmeldetag: 10.05.2010
(51) Int. Cl.: F03D 11/00, H02G 7/05

(54) **KABEL MIT EINER AUFHÄNGEVORRICHTUNG, VERWENDUNG DIESES KABELS UND DER AUFHÄNGEVORRICHTUNG IN EINEM WINDKRAFTWERK SOWIE WINDKRAFTWERK MIT EINEM SOLCHEN KABEL UND EINER SOLCHEN AUFHÄNGEVORRICHTUNG**
CABLE HAVING A MOUNTING DEVICE, USE OF SAID CABLE AND OF THE MOUNTING DEVICE IN A WIND POWER PLANT AND WIND POWER PLANT HAVING SUCH A CABLE AND SUCH A MOUNTING DEVICE
CÂBLE MUNI D'UN DISPOSITIF DE SUSPENSION, UTILISATION DE CE CÂBLE ET DU DISPOSITIF DE SUSPENSION DANS UNE ÉOLIENNE AINSI QU'ÉOLIENNE MUNIE D'UN TEL CÂBLE ET D'UN TEL DISPOSITIF DE SUSPENSION

(30) Priorität: 27.05.2009 CH 812092009
(43) Veröffentlichungstag der Anmeldung: 04.04.2012
(73) Patentinhaber: HUBER + SUHNER AG, 8330 Pfäffikon (CH)
(72) Erfinder: CANTZ, Thomas, CH-8712 Stäfa (CH)
(74) Vertreter: Rentsch Partner AG
(86) Internationale Anmeldenummer: PCT/CH2010/000125
(87) Internationale Veröffentlichungsnummer: WO 2010/135844

(56) Entgegenhaltungen:
- EP-A- 1 921 311
- US-A1- 2004 094 965
- US-A1- 2007 284 143

## Beschreibung

Die Erfindung betrifft ein Kabel mit einer Aufhängevorrichtung, wobei das Kabel im Wesentlichen torsionssteif und biegeflexibel ist und die Aufhängevorrichtung so ausgebildet ist, dass das Kabel mit zwei gegeneinander axial begrenzt drehbaren Teilen verbindbar ist.

Kabel, die im Wesentlichen torsionssteif und biegeflexibel sind, sind beispielsweise als abgeschirmte Koaxialkabel oder auch als Glasfaserkabel bekannt Elektrische Kabel müssen beispielsweise als Signalkabel oder Leistungskabel vielfach mit einer Abschirmung gegen elektrische und magnetische Felder geschützt werden. Diese Abschirmung wird beispielsweise als Drahtgeflecht in Schlauchform um elektrische Leitungen realisiert. Um die Abschirmung ist in der Regel ein Kabelmantel aus extrudiertem polymerem Werkstoff gelegt. Insbesondere bei Koaxialkabeln aus der Hochfrequenztechnik sind solche Geflechtsschläuche als Aussenleiter um einen zentralen Innenleiter und einem Dielektrikum bekannt Glasfaserkabel werden vor allem für die Signalübertragung verwendet. Diese sind bekanntlich sehr torsionssteif und vergleichsweise biegeflexibel. An die Verlegung solcher Glasfaserkabel sind hohe Anforderungen gestellt.

Elektrische Kabel müssen bei gewissen Anwendungen so installiert werden, dass sie gegeneinander axial drehende Teile oder Baugruppen verbinden. Aufgrund der gegeneinander drehbaren Baugruppen muss das Kabel entsprechend.torsionsflexibel sein. Da aber beispielsweise abgeschirmte Koaxialkabel und auch Glasfaserkabel sehr torsionssteif sind, würde eine solche Drehung der Baugruppen gegeneinander das Kabel beschädigen. Ein Beispiel ist insbesondere bei Windkraftwerken gegeben. Diese besitzen eine Gondel, die auf einem Mast gelagert ist und die sich auf die Windrichtung ausrichten muss. Zwischen Gondel und feststehendem Mast entsteht somit eine Torsionsbewegung. Steuer- und Leistungskabel müssen von der um ein paar Drehungen im Uhrzeigersinn oder Gegenuhrzeigersinn rotierenden Gondel in den Mast geführt werden. Von den Kabeln muss eine Torsion von etwa +/- 100° pro Meter aufgenommen werden können. Üblicherweise werden bei solchen torsionsflexiblen Anforderungen die Kabel um die Torsionsachse gewendelt oder es werden Schleifring-Kontaktierungen eingesetzt.

Bei der Windkraftmaschine nach der EP-A-1 921311 ist ein elektrisches Kabel einer Aufhängevorrichtung mit einer Schleife an der Gondel befestigt. Die Schleife ermöglicht eine Rotation der Gondel.

Bei der Windkraftmaschine nach der JP-A 2008-298051 sind Kabel an einem unteren Ende an einer vertikal beweglichen Plattform befestigt. Zudem sind die Kabel um eine vertikale Säule gelegt.

Das Dokument US2004/0094965 A wird als nächtsliegender Stand der Technik augesehen.

Die genannte Schleifring-Kontaktierung ist bei vieladrigen Kabeln sehr aufwendig und zudem störungsanfällig. Bei dicken und schweren Kabeln ist eine gewendelte Anordnung problematisch und ebenfalls aufwendig.

Der Erfindung liegt die Aufgabe zugrunde, ein Kabel mit einer Aufhängevorrichtung gemäss Oberbegriff des Anspruchs 1 so auszubilden, dass die oben genannten Nachteile vermieden sind.

Die Aufgabe ist gemäss Anspruch 1 dadurch gelöst, dass das Kabel schlangenlinienförmig ausgelegt ist und dass die Aufhängevorrichtung ein längliches und torsionsflexibles sowie in Längsrichtung spannbares Tragelement aufweist, das jeweils zwischen zwei benachbarten Biegungen des Kabels mit diesem verbunden ist.

Es hat sich gezeigt, dass ein Kabel mit einer Aufhängevorrichtung gemäss der Erfindung ohne Beschädigung Torsionsbewegungen aufnehmen kann. Das Kabel kann beispielsweise bei einem Windkraftwerk mehrere Rotationen der Gondel in einer Richtung aufnehmen. Bei dieser Anwendung kann das Kabel in Schlangenlinienform aufgehängt und die Kabelenden können oben und unten fix angeschlossen werden. Versuche haben gezeigt, dass eine Torsion, beispielsweise eine vertikale Torsion, am Kabel in Biegungen umgewandelt wird. Dies ist hier ohne Weiteres ohne Beschädigung möglich, da das Kabel wie erwähnt biegeflexibel ist. Entsprechend den Windungen bzw. den Befestigungspunkten zum Tragelement ergibt die Summe dieser Biegungen die gesamte Biegung des Kabels. Die Biegungen werden somit entsprechend den Befestigungspunkten aufgeteilt. Um einen genügenden Verdrehwinkel zu erreichen, wird entsprechend die Anzahl der Befestigungsstellen gewählt. Bei einem Windkraftwerk, bei dem der Mast sehr hoch sein kann, sind somit eine vergleichsweise hohe Anzahl von Befestigungsstellen bzw. Biegungen des Kabels möglich. Entsprechend ist ein hoher Verdrehwinkel möglich.

Das Tragelement ist im Gegensatz zum Kabel im Wesentlichen torsionsflexibel sowie in Längsrichtung spannbar. Es kann beispielsweise als Seil oder Kette ausgebildet sein. Das Seil sollte vorzugsweise so ausgebildet sein, dass es bei einer Torsion eine möglichst minimale Längenänderung aufweist. Geeignet sind beispielsweise spiralgeflochtene Seile, beispielsweise ähnlich einem Bergseil. Möglich sind aber auch Ketten, beispielsweise Ring-Gliederketten, Kugelketten oder auch andere Ketten.

Nach einer Weiterbildung der Erfindung ist vorgesehen, dass die Aufhängevorrichtung ein Spannmittel zum Spannen des Tragelementes aufweist. Bei einer hängenden Anordnung kann aufgrund des Gewichtes des Kabels ein solches Spannmittel weggelassen werden. Das Spannmittel kann beispielsweise eine Zugfeder oder andere geeignete Mittel aufweisen.

Nach einer Weiterbildung der Erfindung ist vorgesehen, dass das Kabel halbkreisförmige Bogen aufweist. Solche Biegungen haben sich insbesondere bei einem elektrischen Kabel als optimal erwiesen. Die Befestigungsstellen sind dann die Wendepunkte zwischen aufeinanderfolgenden halbkreisförmigen Bogen. Das Kabel kann in diesen Befestigungsstellen jedoch auch über einen gösseren Bereich im Wesentlichen rechtwinklig zum gespannten Tragelement verlaufen. Im nicht verdrehten Zustand liegen diese Bogen in einer Ebene.

Nach einer Weiterbildung der Erfindung ist vorgesehen, dass bei gespanntem Tragelement das Kabel Biegungen aufweist, deren Radius wenigstens 10 Mal grösser ist als der Durchmesser des Kabels. Dieses Verhältnis ist besonders vorteilhaft bei einem elektrischen Kabel und insbesondere einem abgeschirmten Koaxialkabel.

Das Kabel kann auch ein Glasfaserkabel sein, das für die optische Signalübertragung vorgesehen ist. Die Ausrichtung kann vertikal, aber auch schräg zur Vertikalen und insbesondere auch horizontal sein.

Das Kabel mit einer Aufhängevorrichtung gemäss der vorliegenden Erfindung eignet sich beispielsweise für die Verwendung in einem Windkraftwerk. Das Kabel verbindet hierbei die Gondel mit einer feststehenden Baugruppe. Es sind jedoch auch andere Verwendungen bzw. Anwendungen denkbar, beispielsweise in einem Bagger, einem Roboter, einem Montageautomaten oder einem Lenksystem. Entsprechend wird dann die Befestigung des Tragelementes gewählt. Diese Befestigung mit Spannvorrichtung kann beispielsweise über einen Haken, ein Gewinde, einen Flaschenzug oder über eine Hebelkonstruktion erfolgen. Die Spannvorrichtung kann an einem oberen, unteren, oder auch an beiden Enden des Tragelementes vorgesehen sein. Die Aufhängevorrichtung wird jeweils so montiert, dass das Tragelement in einer geraden Linie verläuft. Bei einer vertikalen Montage muss es nicht oder nur leicht gespannt werden. Bei anderen Ausrichtungen muss das Tragelement jedoch entsprechend der quer zur Längserstreckung gerichteten Gewichtskraft des Kabels gespannt werden. Vorzugsweise ist eine entsprechende Spannvorrichtung einstellbar.

Weitere vorteilhafte Merkmale ergeben sich aus den abhängigen Patentansprüchen, der nachfolgenden Beschreibung sowie der Zeichnung.

Ein Ausführungsbeispiel der Erfindung ist nachfolgend anhand der Zeichnung näher erläutert.

Es zeigen:
- Fig. 1: Ein Schnitt durch einen oberen Teil eines Windkraftwerkes,
- Fig. 2: schematisch ein Abschnitt eines ausgelegten und nicht verdrehten Kabels,
- Fig. 3: das Kabel gemäss Figur 2, jedoch nach einer Torsion und
- Fig. 4: schematisch eine räumliche Darstellung eines Befestigungsmittels, mit dem das Tragelement mit dem Kabel verbunden ist.

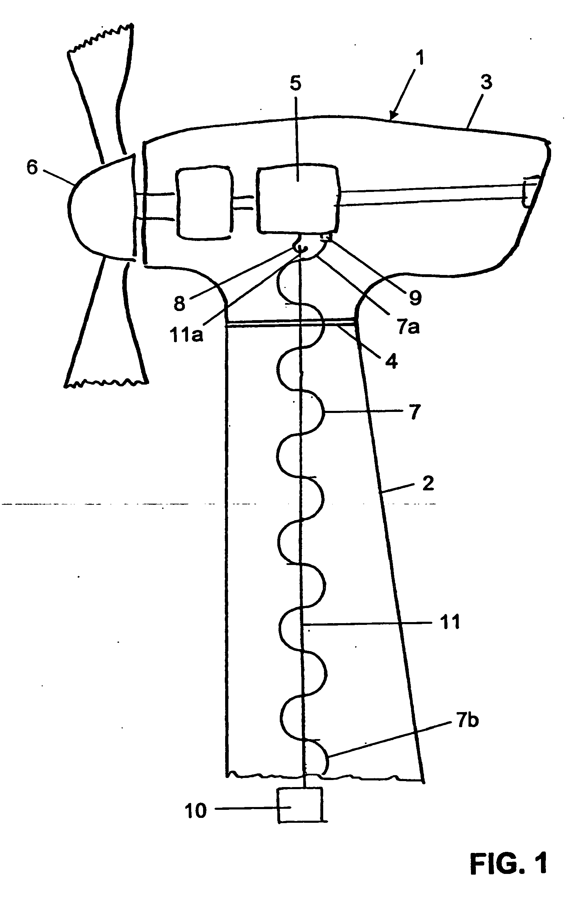

Das in Figur 1 gezeigte Windkraftwerk 1 besitzt in an sich üblicher Weise eine Gondel 3, die um eine vertikale Achse rotierbar auf einem Mast 2 gelagert ist Die Lagerung kann an einem an sich bekannten Drehlager 4 erfolgen. Die Gondel 3 besitzt einen Rotor 6, der zur Erzeugung von elektrischem Strom mit einem Generator 5 verbunden ist, welcher in der Gondel 3 angeordnet ist. Zur Übertragung der elektrischen Leistung und zur Steuerung ist der Generator 5 an einem Anschluss 9 mit einem ersten Ende 7a eines Kabels 7 verbunden. An einem anderen Ende 7b ist das Kabel 7 mit einer hier nicht gezeigten Baugruppe oder dergleichen verbunden. Das Kabel 7 ist im Wesentlichen torsionssteif, jedoch biegeflexibel. Es verläuft vorzugsweise innerhalb des Mastes 2 über die ganze Höhe oder über einen Teil des Mastes 2.

Das Kabel 7 ist an einem Tragelement 11 befestigt. Dieses ist an einem oberen Ende 11a mittels eines Befestigungsteils 8 am Generator 5 befestigt. Das Befestigungsteil 8 kann ein Haken oder sonst eine geeignete Befestigungsvorrichtung sein. Das Befestigungsteil 8 kann auch Spannmittel, beispielsweise ein Flaschenzug oder dergleichen aufweisen, um das Tragelement 11 zu spannen. Möglich ist auch eine Ausbildung, bei welcher das untere Ende 7b an einer ortsfesten Spannvorrichtung 10 befestigt ist. Bei einer vertikalen Ausrichtung des Kabels 7 gemäss Figur 1 kann die erforderliche Spannkraft vergleichsweise klein sein. Bei einer ebenfalls möglichen geneigten oder horizontalen Ausrichtung wird die Spannkraft entsprechend dem Gewicht des Kabels 7 höher sein. Die Spannkraft wird insbesondere so gewählt, dass das Tragelement 11 in einer im Wesentlichen geraden Linie verläuft.

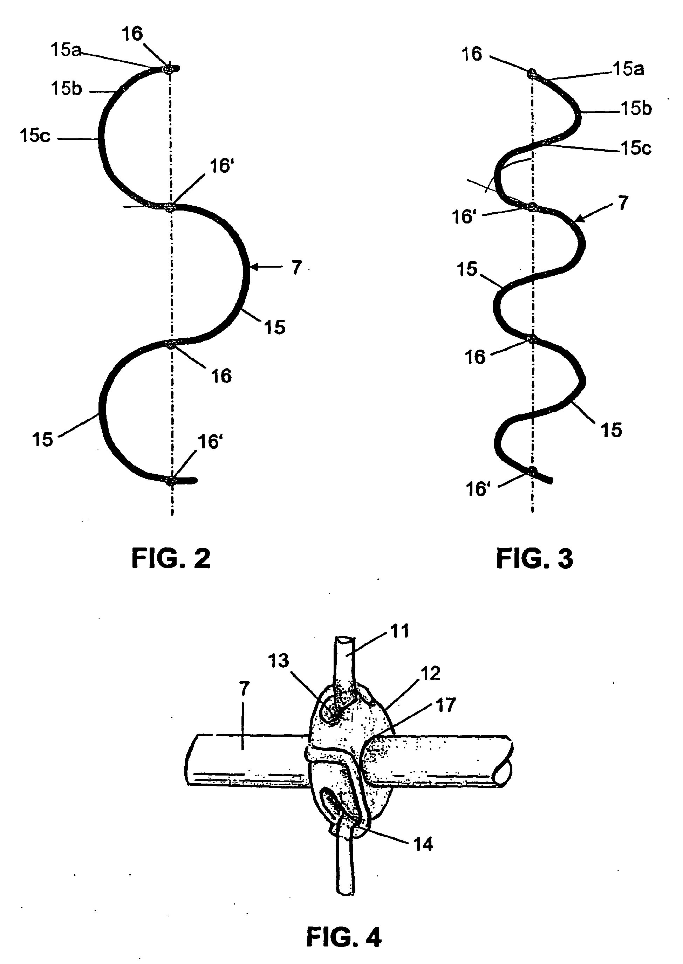

Das Kabel 7 ist wie ersichtlich schlangenlinienförmig ausgelegt und besitzt mehrere Bogen 15, die vorzugsweise angenäherte halbkreisförmige Bogen sind. Es sind hier aber auch Abweichungen von dieser Form möglich. Jeweils zwischen zwei benachbarten Bögen 15 ist das Kabel 7 an einer Befestigungsstelle 16 mit dem Tragelement 11 verbunden. Die Befestigung kann gemäss Figur 4 mittels eines Verbindungselementes 12 realisiert sein, das einen Durchgang 17 für das Kabel 7 und eine hierzu quer verlaufende keilförmige Vertiefung 13 für das Tragelement 11 aufweist. Mittels einer Klammer 14 kann das Tragelement 11 mit dem Verbindungsmittel 12 verbunden sein. Denkbar ist aber auch eine andere Befestigung, beispielsweise eine Klebeverbindung, eine Schraubverbindung oder eine Pressverbindung. Das Verbindungsmittel 12 gemäss Figur 4 kann ein separat hergestelltes Spritzgussteil sein oder kann am Kabel 7 und/oder am Tragelement 11 angespritzt sein. Möglich ist auch eine Verbindung durch einen geeigneten Knoten. Die Verbindungsstelle zwischen dem Tragelement 11 und dem Kabel 7 sollte aber vorzugsweise weitgehend punktuell sein. Die Verbindungsstelle befindet sich gemäss Figur 2 in einem Befestigungspunkt 16 bzw. 16', der bezüglich des Verlaufs des Kabels 7 einen Wendepunkt bildet An diesem geht der eine Bogen in den anderen über.

Der Radius der Bögen 15 richtet sich insbesondere nach dem Durchmesser des Kabels 7. Bei einem elektrischen Kabel und insbesondere einem abgeschirmten Koaxialkabel ist der Durchmesser der Bögen 15 jeweils vorzugsweise mindestens 8 Mal grösser als der Durchmesser des Kabels 7. Es sind hier aber auch andere Verhältnisse denkbar. Geeignete Verhältnisse können rechnerisch oder in einem praktischen Versuch ermittelt werden

Im nicht tordierten Zustand befinden sich die Bögen 15 in einer Ebene. Bei einer Verdrehung können die Bogen 15 gemäss Figur 3 jeweils spiralförmig gebogen werden. Diese Biegungen ermöglichen die genannte Torsion. Ein Vergleich der Figuren 2 und 3 zeigt folgendes: In Punkt 15a ist eine Biegung mit einer Achsdrehung von 90° möglich. Im Punkt 15b erfolgt eine Biegung mit einer Achsdrehung um 45°. Im Punkt 15c ist die Kabelbelastung minimal, die Biegerichtung bleibt gleich. Lediglich der Radius wird hier kleiner.

### BEZUGSZEICHENLISTE

- 1: Windkraftwerk
- 2: Mast
- 3: Gondel
- 4: Drehlager
- 5: Generator
- 6: Rotor
- 7: Kabel
- 8: Befestigungsteil
- 9: Anschluss
- 10: Spannvorrichtung
- 11: Tragelement
- 12: Verbindungsmittel
- 13: Vertiefung
- 14: Klammer
- 15: Bogen
- 16: Befestigungspunkt
- 17: Durchgang

## Patentansprüche

1. Kabel mit einer Aufhängevorrichtung, wobei das Kabel im wesentlichen torsionssteif und im wesentlichen biegeflexibel ist und die Aufhängevorrichtung so ausgebildet ist, dass das Kabel mit zwei sich gegeneinander axial begrenzt drehbaren Teilen (2, 3) verbindbar ist, **dadurch gekennzeichnet, dass** das Kabel schlangenlinienförmig ausgelegt ist und dass die Aufhängevorrichtung ein längliches und torsionsflexibles sowie in Längsrichtung spannbares Tragelement (11) aufweist, das jeweils zwischen zwei benachbarten Biegungen (15) des Kabels mit diesem verbunden ist

2. Kabel mit einer Aufhängevorrichtung nach Anspruch 1, **dadurch gekennzeichnet, dass** das Tragelement (11) ein Seil oder eine Kette ist.

3. Kabel mit einer Aufhängevorrichtung nach Anspruch 1 oder 2, **dadurch gekennzeichnet, dass** die Aufhängevorrichtung ein Spannmittel (10) zum Spannen des Tragelementes (11) aufweist.

4. Kabel mit einer Aufhängevorrichtung nach einem der Ansprüche 1 bis 3, **dadurch gekennzeichnet, dass** das Kabel halbkreisförmige Bogen (15')anfweist

5. Kabel mit einer Aufhängevorrichtung nach einem der Ansprüche 1 bis 4, **dadurch gekennzeichnet, dass** das Tragelement (11) im gespannten Zustand mit dem Kabel jeweils in einem Bereich (16') verbunden ist, der im Wesentlichen rechtwinklig zum Tragelement verläuft.

6. Kabel mit einer Aufhängevorrichtung nach einem der Ansprüche 1 bis 5, **dadurch gekennzeichnet, dass** das Tragelement (11) im gespannten Zustand jeweils an einem Wendepunkt (16') des Kabels mit diesem verbunden ist.

7. Kabel mit einer Aufhängevorrichtung nach einem der Ansprüche 1 bis 6, **dadurch gekennzeichnet, dass** bei gespanntem Tragelement (11) das Kabel Biegungen (15') aufweist, deren Radius wenigstens acht Mal grösser ist als der Durchmesser des Kabels.

8. Kabel mit einer Aufhängevorrichtung nach einem der Ansprüche 1 bis 7, **dadurch gekennzeichnet, dass** das Kabel ein elektrisches Kabel ist

9. Kabel mit einer Aufhängevorrichtung nach Anspruch 8, **dadurch gekennzeichnet, dass** das Kabel ein abgeschirmtes Koaxialkabel ist.

10. Kabel mit einer. Aufhängevorrichtung nach einem der Ansprüche 1bis 7, **dadurch gekennzeichnet, dass** das Kabel ein Glasfaserkabel ist.

11. Kabel mit einer Aufhängevorrichtung nach einem der Ansprüche 1 bis 10, **dadurch gekennzeichnet, dass** die Aufhängevorrichtung an einem oberen Ende (11a) vertikal hängend befestigbar ist.

12. Kabel mit einer Aufhängevorrichtung nach einem der Ansprüche 1 bis 10, **dadurch gekennzeichnet, dass** die Aufhängevorrichtung geneigt zur Vertikalen befestigbar und spannbar ist.

13. Verwendung des Kabels und der Aufhängevorrichtung nach einem der Ansprüche 1 bis 12 in einem Windkraftwerk (1), wobei das Kabel an einem oberen Ende mit dem Generator (5') verbunden ist

14. Verwendung des Kabels nach Anspruch 13, **dadurch gekennzeichnet, dass** der Generator (5')in einer Gondel (3) angeordnet ist, die bezüglich eines Mastes (2) begrenzt drehbar ist

15. Windkraftwerk mit einem Kabel und einer Aufhängevorrichtung nach einem der Ansprüche 1 bis 12, **dadurch gekennzeichnet, dass** sich das Kabel über eine wesentliche Länge des Mastes (2) ersteckt

## Claims

1. Cable with a suspension device, wherein the cable is essentially torsionally rigid and essentially flexurally flexible and the suspension device is designed such that the cable can be connected to two parts (2, 3) which can be rotated axially to a limited extent in relation to one another, **characterized in that** the cable is of serpentine configuration, and **in that** the suspension device has an elongate and torsionally flexible carrying element (11), which can be tensioned in the longitudinal direction and is connected to the cable in each case between two adjacent bends (15) thereof.

2. Cable with a suspension device according to Claim 1, **characterized in that** the carrying element (11) is a rope or a chain.

3. Cable with a suspension device according to Claim 1 or 2, **characterized in that** the suspension device has a tensioning means (10) for tensioning the carrying element (11).

4. Cable with a suspension device according to one of Claims 1 to 3, **characterized in that** the cable has semicircular arcs (15').

5. Cable with a suspension device according to one of Claims 1 to 4, **characterized in that** the carrying element (11), in the tensioned state, is connected to the cable in each case in a region (16') which runs essentially at right angles to the carrying element.

6. Cable with a suspension device according to one of Claims 1 to 5, **characterized in that** the carrying element (11), in the tensioned state, is connected to the cable in each case at a turning point (16') of the same.

7. Cable with a suspension device according to one of Claims 1 to 6, **characterized in that**, when the carrying element (11) is in the tensioned state, the cable has bends (15') of which the radius is at least eight times greater than the diameter of the cable.

8. Cable with a suspension device according to one of Claims 1 to 7, **characterized in that** the cable is an electric cable.

9. Cable with a suspension device according to Claim 8, **characterized in that** the cable is a shielded coaxial cable.

10. Cable with a suspension device according to one of Claims 1 to 7, **characterized in that** the cable is a glass-fibre cable.

11. Cable with a suspension device according to one of Claims 1 to 10, **characterized in that** the suspension device can be fastened to hang vertically at an upper end (11a).

12. Cable with a suspension device according to one of Claims 1 to 10, **characterized in that** the suspension device can be fastened, and tensioned, in an inclined state in relation to the vertical.

13. Use of the cable and of the suspension device according to one of Claims 1 to 12 in a wind turbine (1), wherein the cable is connected to the generator (5') at an upper end.

14. Use of the cable according to Claim 13, **characterized in that** the generator (5') is arranged in a nacelle (3), which can be rotated to a limited extent in relation to a tower (2).

15. Wind turbine with a cable and a suspension device according to one of Claims 1 to 12, **characterized in that** the cable extends over a considerable length of the tower (2).

## Revendications

1. Câble muni d'un dispositif de suspension, dans lequel le câble est sensiblement rigide en torsion et sensiblement flexible en flexion, et le dispositif de suspension est réalisé de telle sorte que le câble puisse être connecté à deux parties (2, 3) pouvant tourner axialement de manière limitée l'une par rapport à l'autre, **caractérisé en ce que** le câble est conçu sous forme de serpentin et **en ce que** le dispositif de suspension présente un élément porteur (11) longiligne et flexible en torsion, et pouvant être tendu dans la direction longitudinale, lequel est connecté au câble à chaque fois entre deux courbures adjacentes (15) de celui-ci.

2. Câble muni d'un dispositif de suspension selon la revendication 1, **caractérisé en ce que** l'élément porteur (11) est un câble ou une chaîne.

3. Câble muni d'un dispositif de suspension selon la revendication 1 ou 2, **caractérisé en ce que** le dispositif de suspension présente un moyen de tension (10) pour tendre l'élément porteur (11).

4. Câble muni d'un dispositif de suspension selon l'une quelconque des revendications 1 à 3, **caractérisé en ce que** le câble présente des arcs (15') en forme de demi-cercle.

5. Câble muni d'un dispositif de suspension selon l'une quelconque des revendications 1 à 4, **caractérisé en ce que** l'élément porteur (11) est connecté au câble dans l'état tendu à chaque fois dans une région (16') qui s'étend sensiblement à angle droit par rapport à l'élément porteur.

6. Câble muni d'un dispositif de suspension selon l'une quelconque des revendications 1 à 5, **caractérisé en ce que** l'élément porteur (11) est connecté au câble dans l'état tendu à chaque fois au niveau d'un point d'inflexion (16') du câble.

7. Câble muni d'un dispositif de suspension selon l'une quelconque des revendications 1 à 6, **caractérisé en ce que** lorsque l'élément porteur (11) est tendu, le câble présente des courbures (15') dont le rayon est au moins huit fois supérieur au diamètre du câble.

8. Câble muni d'un dispositif de suspension selon l'une quelconque des revendications 1 à 7, **caractérisé en ce que** le câble est un câble électrique.

9. Câble muni d'un dispositif de suspension selon la revendication 8, **caractérisé en ce que** le câble est un câble coaxial blindé.

10. Câble muni d'un dispositif de suspension, selon l'une quelconque des revendications 1 à 7, **caractérisé en ce que** le câble est un câble en fibres de verre.

11. Câble muni d'un dispositif de suspension selon l'une quelconque des revendications 1 à 10, **caractérisé en ce que** le dispositif de suspension peut être fixé à une extrémité supérieure (11a) en suspension verticale.

12. Câble muni d'un dispositif de suspension selon l'une quelconque des revendications 1 à 10, **caractérisé en ce que** le dispositif de suspension peut être fixé et tendu de manière inclinée par rapport à la verticale.

13. Utilisation du câble et du dispositif de suspension selon l'une quelconque des revendications 1 à 12 dans une éolienne (1), le câble étant connecté par une extrémité supérieure au générateur (5').

14. Utilisation du câble selon la revendication 13, **caractérisée en ce que** le générateur (5') est disposé dans une gondole (3) qui peut tourner de manière limitée par rapport à un mât (2).

15. Eolienne comprenant un câble et un dispositif de suspension selon l'une quelconque des revendications 1 à 12, **caractérisée en ce que** le câble s'étend sur une longueur substantielle du mât (2).
